Europäisches Patentamt

European Patent Office

Office européen des brevets

(11) Publication number: **0 228 688**
**A2**

## (12) EUROPEAN PATENT APPLICATION

(21) Application number: **86117855.6**

(22) Date of filing: **22.12.86**

(51) Int. Cl.⁴: **G 11 B 5/127**

(30) Priority: **23.12.85 JP 289924/85**

(43) Date of publication of application:
**15.07.87 Bulletin 87/29**

(84) Designated Contracting States:
**DE FR GB**

(71) Applicant: **Matsushita Electric Industrial Co., Ltd.
1006, Oaza Kadoma
Kadoma-shi Osaka-fu, 571(JP)**

(72) Inventor: **Mitani, Satoru
30-3, Nishimakino 3-chome
Hirakata City, 573(JP)**

(74) Representative: **Dr. Elisabeth Jung Dr. Jürgen
Schirdewahn Dipl.-Ing. Claus Gernhardt
P.O. Box 40 14 68 Clemensstrasse 30
D-8000 München 40(DE)**

(54) Perpendicular magnetic recording head.

(57) A perpendicular magnetic recording head having a main pole film of an amorphous alloy magnetic film containing Co as principal component is improved by being coated by a non-oxide passivation film of nitride such as $Si_3N_4$ or $A\ell N$ or carbide such as SiC, instead of being coated by conventional $SiO_2$ film; since the passivation film does not contain oxygen, the amorphous alloy film is not oxidized during annealing in the manufacturing process; and the forming of the passivation film is made in a continuous sputtering without breaking vacuum after sputtering the amorphous alloy magnetic film.

FIG.4

EP 0 228 688 A2

TITLE OF THE INVENTION

Perpendicular magnetic recording head

FIELD OF THE INVENTION AND RELATED ART STATEMENT

1. FIELD OF THE INVENTION

The present invention relates generally to magnetic recording head, and particularly to perpendicular magnetic recording head.

2. DESCRIPTION OF THE RELATED ART

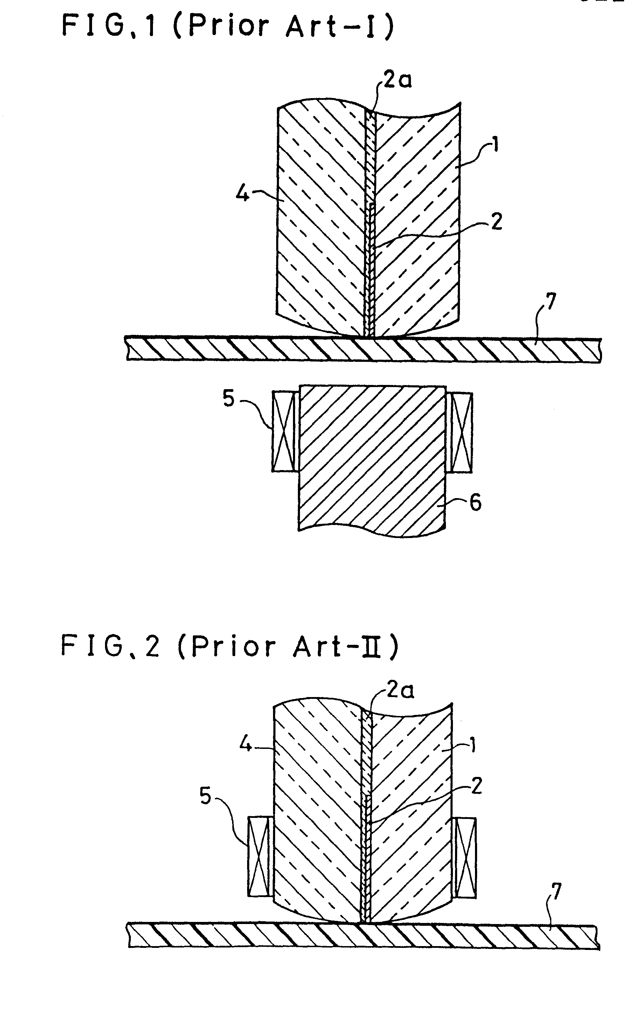

Perpendicular magnetic recording enables signal recording at a much higher density in comparison with the conventional longitudinal magnetic recording. And as transducer heads for the perpendicular magnetic recording, the below-mentioned prior arts, shown in FIG.1, FIG.2 and FIG.3 are known.

FIG.1 shows a first prior art, wherein on a substrate 1, an amorphous alloy magnetic film 2 is formed to constitute a main pole and a cover substrate 4 is bonded thereon by means of an adhesive layer 2a, and an auxiliary magnetic pole 6 having a signal winding 5 is disposed so as to oppose the aforementioned main pole with a recording medium 7 therebetween.

FIG.2 shows a second prior art, wherein a main-pole-driven head has a signal winding 5 so as to encompass the main pole 2, whereby there is no need of disposing an auxiliary pole on the opposite side of a recording medium 7.

1

2

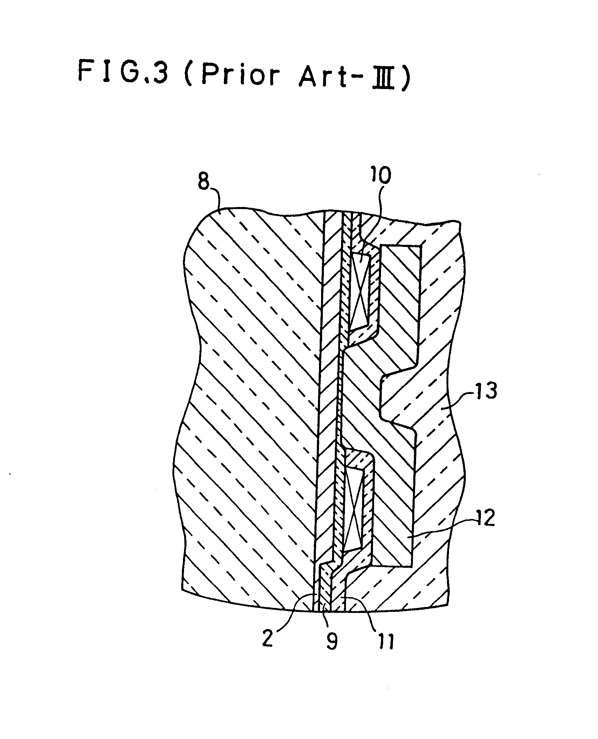

FIG.3 shows a third prior art of main-pole-driven head type thin film magnetic head, wherein on a non-magnetic substrate 8, a main pole of an amorphous alloy magnetic film 2, an insulation layer 9, a thin film winding 10 made by known photolithographic method, a second insulation layer 11, a return yoke 12 made of a magnetic film and a passivation layer 13 are formed in sequence.

In all the above-mentioned prior arts of perpendicular magnetic recording head, recording is made by making a recording current flow through the winding 5 or the thin film winding 10, and reproducing is made by detecting a signal voltage induced in the winding from the magnetization on the recording medium.

As is known in the well-known theory, the greater the permeability of the main pole is, the better the recording and reproducing characteristic become. Accordingly, as the magnetic film to constitute the main pole, amorphous alloy magnetic film containing Co as principal component and Zr, Nb and/or Ta as additives which has high permeability, high corrosion resistivity and high abrasion-resistivity is used. Such amorphous alloy film is usually formed by sputtering method, and then is annealed in a high temperature and vacuum in order to induce a high permeability.

Furthermore, in order to reproduce signals from magnetization recorded in high density, an extremely thin thickness of the main pole film will be required.  When such a very thin film of an amorphous alloy material, for instance, 0.2 μm or thinner, is annealed in a high temperature, formation of an oxide layer on the surface of the amorphous alloy film due to the annealing becomes innegligible in comparison with the total thickness of the amorphous alloy film.  Accordingly, coercive force of the main pole as a whole becomes large and the permeability is lowered.

Although, there is a proposal to avoid the oxidation in annealing by covering the amorphous alloy film with $SiO_2$ film, effect of the prevention of oxidation of the amorphous alloy film has not been sufficient, and increase of the coercive force and lowering of the permeability can not be prevented enough.

OBJECT AND SUMMARY OF THE INVENTION

The object of the present invention is to provide an improved perpendicular magnetic recording head capable of perpendicular recording with high recording and reproducing characteristics.

In order to resolve the above-mentioned problem of the prior arts, in the present invention, oxidation of the main magnetic film during the annealing is protected by forming a non-oxide film to cover the main pole film. The non-oxide film is of at least one compound of an element selected from the group consisting of nitrogen, boron and carbon. Such non-oxide passivation film can protect the main pole film from oxidation during anneal process in the manufacturing. Furthermore, in the manufacturing process of the main pole film and the non-oxide passivation film, it is preferrable that both films are formed in the same vacuum chamber to make a continuous sputtering, and thereby undesirable forming of hitherto produced oxide film of several hundred $\overset{\circ}{A}$ on the surface of the main pole film can be eliminated.

That is, the perpendicular magnetic recording head in accordance with the present invention comprises:

a magnetic film which serves as a main pole and an additional film formed thereon of at least one compound of an element selected from the group consisting of nitrogen, boron and carbon.

Further, a method for making perpendicular magnetic recording head in accordance with the present invention comprises:

step of putting a substrate in a vacuum chamber,

growing of a magnetic film which serve as a main pole on the substrate by a sputter deposition, and

sequential growing of a passivation film of at least one compound selected from a group consisting of nitride, boride and carbide on the magnetic film, without breaking vacuum therebetween.

5

According to the constitution and method in accordance with the present invention, the main pole film, immediately after growing, is covered by the passivation film of non-oxide material which has dense constitution and effectively prevents oxidation of the former film. Therefore the undesirable oxidation of the material of the main pole film is eliminated, thereby preventing undesirable increase of coercive force and lowering of permeability of the material of the main pole film.

BRIEF DESCRIPTION OF THE DRAWING

FIG.1 is the sectional side view of the first prior art of the perpendicular magnetic recording head.

FIG.2 is a sectional side view of the second prior art of the perpendicular magnetic recording head.

FIG.3 is a sectional side view of the third prior art of the perpendicular magnetic recording head.

FIG.4 is a sectional side view of a preferred embodiment of perpendicular magnetic recording head in accordance with the present invention.

FIG.5 is a characteristic graph showing relations between coercive force after annealing of the amorphous alloy magnetic film and thickness of passivation film formed on the amorphous alloy magnetic film.

DESCRIPTION OF THE PREFERRED EMBODIMENTS

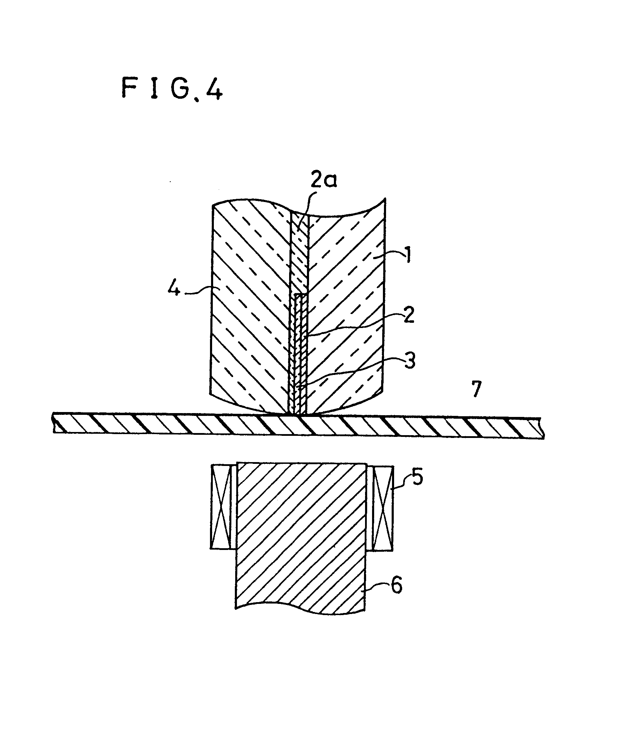

FIG.4 shows a sectional view of an essential part of a preferred embodiment. As shown in FIG.4, on a

5

non-magnetic substrate 1, such as $SiO_2$ substrate, an amorphous alloy magnetic film 2 of Co-Nb-Zr of about 0.15 μm thickness is formed by sputtering method in a vacuum chamber, and by keeping the same vacuum state in the chamber, a subsequent sputtering is made to form a passivation film 3 of silicon nitride of about 0.2 μm thickness. The silicon nitride film is formed by disposing a silicon piece as target in a vacuum chamber and making sputtering in a mixed gas of Ar and $N_2$, and its composition is a little different from ideal $Si_3N_4$. But the silicon nitride film has excellent passivation effect against oxidation of the magnetic film, for any case of variation of composition ratio of Sr and N. Then, the substrate is taken out from the vacuum chamber, and by means of known photolithography and ion milling, a main pole film of preferred configuration is made. Then, the amorphous alloy magnetic film 2 on the substrate is annealed at a temperature of about 430°C in a vacuum of about $10^{-5}$ Torr. The annealing is made under existence of a magnetic field of 500 Oe in a track-width direction of the main pole for about 20 minutes, and subsequently the above-mentioned magnetic field is rotated with a rotation speed of about 100 rpm in the plane of film face of the main magnetic film to be retained for about 20 minutes. After the annealing, a cover substrate 4 of the same material as that of the substrate 1 is bonded, and its

7

operative surface is mirror-ground, thereby to complete a
perpendicular magnetic recording head.  The magnetic head
further comprises known auxiliary magnetic pole piece 6
and a winding 5 in the same manner as the prior art of
FIG.1.

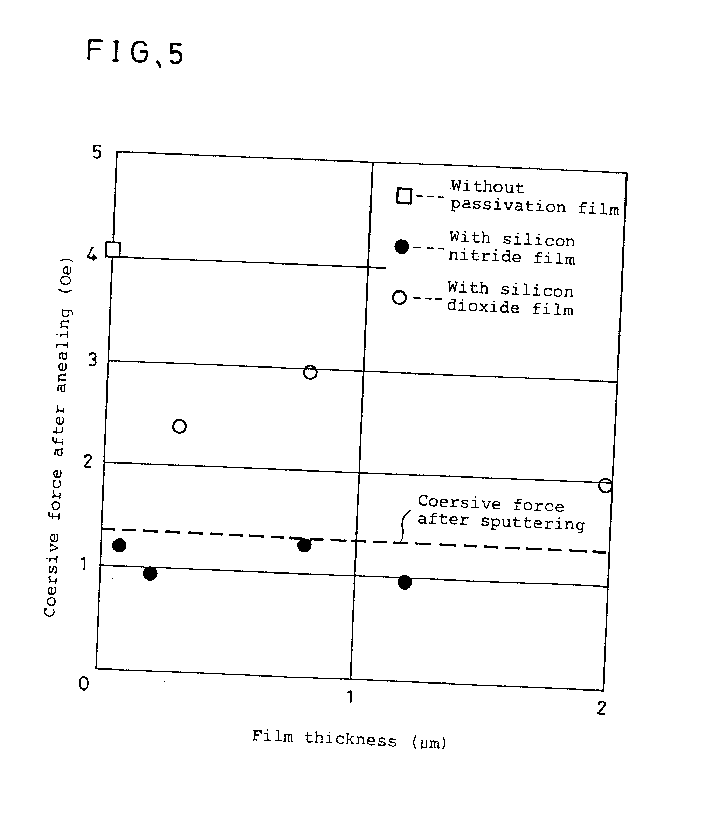

FIG.5 shows relations between coercive force
after annealing in the easy magnetization directions and
film thickness of the passivation film for the silicon
nitride passivation film in accordance with the present
invention, as well as, the conventional $SiO_2$ passivation
film.  The passivation films are formed on the amorphous
alloy ferromagnetic film of about 0.1 μm thickness in
continuous sputtering method without breaking the vacuum.
The annealing is made at about 430°C for 40 minutes under
a magnetic field of 500 Oe in a vacuum of about $10^{-5}$ Torr.
The experimental results shown in the graph of FIG.5
reveal that the comparison example having no passivation
film shows an increase of the coercive force of about 4
Oe, another comparison example having $SiO_2$ passivation
film shows an increase of the coercive force of 2--3 Oe,
and the example embodying the present invention, wherein
the magnetic film is covered by the silicon nitride film,
has no noticeable increase of the coercive force even when
the film thickness of the passivation silicon nitride film
is only 0.1 μm thick.  As a summary, the use of silicon
nitride passivation film on the amorphous alloy magnetic

8

film to be annealed in the manufacturing process is very effective against oxidation.

In case of conventional use of $SiO_2$ passivation film, even when a film of such a large thickness as 2 µm is used, the oxidation-prevention effect is small. And accordingly, it is considered that free oxygen in the $SiO_2$ film may be one possible cause of the oxidation of the underlying amorphous alloy magnetic film. And actually, ceramic films other than oxide, for instance, nitride films such as silicon nitride ($Si_3N_4$); aluminum nitride (AℓN) or carbide film such as silicon carbide (SiC) are preferable as the anti-oxidation passivation film. Especially among the above-mentioned ones, nitride films are advantageous in having a capability of growing in a continuous sputtering method wherein after growing by sputtering of an amorphous alloy magnetic film the nitride passivation film is formed in the same vacuum chamber by consecutive sputtering, without breaking vacuum of the chamber. And furthermore, the consecutively sputtered passivation films have a merit of preventing oxidation of the magnetic film when exposed to air after deposition.

Nitride films such as aluminum nitride (AℓN), titanium nitride or carbide film such as silicon carbide, showed the same passivation effect, since they do not contain oxigen therein.

Though metal films such as silicon, aluminum,

8

titanium may be considered as the anti-oxidation passivation film, there is a liability of uneven wearing of the passivation film or breaking out of the underlying amorphous alloy magnetic film by slidings of recording material thereon. Accordingly, the nitride film, carbide film or boride film are more preferable than the metal film, as the passivation film.

In a still further modified embodiment, wherein a main pole film is disposed between a pair of anti-oxidation passivation film, that is, both surfaces of the main pole film is coated by the anti-oxidation passivation films, the passivation films are preferably the same non-oxide compounds as those mentioned above, instead of $SiO_2$ film. That is, films of ceramic, for instance, nitride films such as silicon nitride ($Si_3N_4$), aluminum nitride ($A\ell N$) or carbide film such as silicon carbide (SiC) are preferable as the passivation film. By providing such passivation films on both faces of the amorphous alloy magnetic film as the main pole film, undesirable oxidation from both surfaces of the main pole film during the annealing process can be prevented.

While specific embodiments of the invention have been illustrated and described herein, it is realized that modifications and changes will occur to those skilled in the art. It is therefore to be understood that the appended claims are intended to cover all modifications and changes as fall within the true spirit and scope of the invention.

ll

## WHAT IS CLAIMED IS

1.      A perpendicular magnetic recording head comprising:

a magnetic film *(2)* which serves as a main pole of said head and

an additional film *(3)* formed thereon of at least one compound of an element selected from the group consisting of nitrogen  and carbon.

2.      A perpendicular magnetic recording head in accordance with claim 1, wherein

said element is nitrogen.

3.      A perpendicular magnetic recording head in accordance with claim 1, wherein

said magnetic film *(2)* is of an amorphous alloy.

4.      A perpendicular magnetic recording head in accordance with claim 3, wherein

said magnetic film of amorphous alloy contains Co as principal material and further contains at least an element selected from a group consisting of Zr, Nb, Ta, Ti, W, Y and Hf.

5.      A perpendicuclar magnetic recording head comprising:

a magnetic film of amorphous alloy which serves as a main pole of said head and

a film of a compound of nitrogen.

6.      A perpendicular magnetic recording head in

11

accordance with claim 5, wherein

said compound is silicon nitride.

7.        A perpendicuclar magnetic recording head comprising:

a magnetic film $(2)$ which serves as a main pole of said head and

an additional film $(3)$ formed thereon of a non-oxide compound.

8.        A perpendicular magnetic recording head in accordance with claim 7, wherein

said non-oxide compound is one member selected from the group consisting of nitride and carbide.

9.        A perpendicular magnetic recording head in accordance with claim 8, wherein

said nitride is silicon nitride.

10.       A perpendicuclar magnetic recording head in accordance with claim 8, wherein

said non-oxide film is a ceramic film.

11.       Method for manufacturing perpendicular magnetic recording head in accordance with the present invention comprising:

step of putting a substrate $(1)$ in a vacuum chamber,

growing of a magnetic film $(2)$ which serve as a main pole of said head on said substrate by a sputter deposition, and

sequential growing of a passivation film $(3)$ of at

least one compound selected from a group consisting of nitride and carbide on said magnetic film without breaking vacuum therebetween.

0228688

# FIG.1 (Prior Art-I)

# FIG.2 (Prior Art-II)

# FIG.3 (Prior Art-Ⅲ)

# F I G.4

# FIG.5

Film thickness (μm)